# EUROPEAN PATENT SPECIFICATION

(11) **EP 0 927 234 B1**
(45) Date of publication and mention of the grant of the patent: **27.06.2001**
(21) Application number: 97941419.0
(22) Date of filing: 05.09.1997
(51) Int. Cl.: C09J 175/04

(54) **TWO-COMPONENT POLYURETHANE ADHESIVE COMPOSITION USED IN BONDED STRUCTURAL ELEMENT OF LIMESTONE AND SIMILAR MATERIALS**
IN EINEM VERBUND-WANDELEMENT AUS KALKSTEIN ODER ÄHNLICHEM MATERIAL VERWENDETE ZWEIKOMPONENTEN-POLYURETHAN-KLEBESTOFFZUSAMMENSETZUNG
COMPOSITION D'ADHESIF DE POLYURETHANE A DEUX COMPOSANTS UTILISEE DANS UN ELEMENT DE CONSTRUCTION LIE A BASE DE CALCAIRE ET AUTRES MATIERES SIMILAIRES

(30) Priority: 06.09.1996 DE 29615577 U
(43) Date of publication of application: 07.07.1999
(73) Proprietor: H.B. Fuller Licensing & Financing, Inc., St. Paul, Minnesota 55110-5132 (US)
(72) Inventor: HOREIS, Kai, A-4609 Thalheim (AT)
(74) Representative: Maiwald, Walter, Dr. Dipl.-Chem.
(86) International application number: US9715595
(87) International publication number: WO9810030

(56) References cited:
- EP-A- 0 452 754
- EP-A- 0 481 319
- EP-A- 0 676 427
- US-A- 3 856 741

## Description

The invention pertains to assemblies of pieces of limestone or other mason's material (*i.e.* stone, brick, ceramic or concrete), bonded together to form a self supporting structural element. In particular, the invention pertains to an architectural element such as a wall, floor, or walkway element, comprising pieces of limestone or other mason's materials, whereby the pieces of such material that comprise the wall element are bonded in a fixed position by a reactive, two-component polyurethane adhesive composition.

Materials, such as mortar, are known for bonding pieces of limestone and other mason's materials in a fixed position.

The bonding materials that are known from the prior art exhibit the disadvantage that they have an excessively low adhesive power or force of adhesion so that, on using these materials, structures with a large surface area that comprise pieces of limestone, for example, ready-to-use construction elements for building into a wall or prefabricated slabs, cannot be manufactured such that are then capable of being pivoted, raised, or transported in one piece without the use of supporting elements without the existence of the risk of damaging the wall element. Such preassembled slabs, made with conventional bonding materials typically are so weakly bonded that pivoting, raising or transporting them unsupported causes the individual elements to become partially or completely detached from their bonding in the wall element. Thus it has often been necessary to build steel anchors or the like into the wall element in order to improve handling stability of the element. The wall elements that are manufactured in accordance with the prior art also exhibit the disadvantage that the materials that are used for anchoring them in a fixed position cannot be applied in very thin layers. In addition, the material emerges from the lateral edges of the glued surfaces when gluing pieces of limestone and similar minerals when using the materials that are known in the prior art; this is a consequence of the relatively thick layer that is applied so that, on the one hand, wall elements with smooth outer surfaces cannot be manufactured and, on the other hand, the individual pieces of limestone are not bound in a continuous, uniform, and unitary shape. Finally, the setting time, i.e., the time up to the complete hardening of mortars, usually amounts to 24 hours and more so that prefabricated wall elements are not capable of being raised, transported, or worked on after only a few hours without the existence of a risk of damaging the wall element.

US patent No. 3,856,741 discloses an adhesive or sealant composition of the polyurethane type containing white pigment capable of adhering to concrete under conditions of low temperature. The compositions are intended for sealing joints in concrete buildings or structures to prevent air and other materials from penetrating into the joints.
European patent application EP-A-0 481 319 discloses two component polyurethane adhesives wherein the polyol component comprises mixtures of compatible polyols with improved storage stability.
European patent application EP-A-0 676 427 discloses thixotropic two component polyurethane adhesives, which are free of inorganic fillers. The polyurethane compositions of both of these EPdocuments are said to be capable of bonding inter alia stones.

A task that therefore forms the basis of the invention is to identify a bonding composition for pieces of limestone and similar mason's materials with a rapid hardening time and a high adhesive force, whereby a self-supporting wall element may be constructed. This task has been accomplished with a reactive polyurethane adhesive composition that consists of two components by forming the composition from a component (A), that contains at least one polyol, and preferably also contains at least one plasticizer; and a component (B), that contains at least one isocyanate compound.

As a result of the shorter hardening times for the composition that is used in accordance with the invention, lower storage capacities are needed during the manufacture of the finished construction elements. An advantageous feature is also that so-called limestone slabs can be manufactured significantly faster and therefore more inexpensively because of the shortened hardening times. In particular, wall elements can also be manufactured in the form of finished elements of very large size, for example, wall constructions with the height of a full story, which comprise pieces of limestone and/or similar material. Such wall elements that weigh several tons can be processed after only a short time without the danger of damage to the wall element since the composition that is used in accordance with the invention can bond wall stones such as chalk-limestone, etc., in a breakage-resistant manner. In this way, such finished construction elements that weigh several tons can, for example, be raised by a crane and are capable of being transported even after a short time and without support because of the static properties that are achieved as a result of gluing. Further, the composition can be applied very thinly and the finished wall elements can be manufactured with tight joints. In addition, the composition in accordance with the invention can also be processed mechanically and can be applied by so-called construction robots or other suitable computer-controlled devices, thereby giving a still further manufacturing process advantage over wall elements manufactured with conventional mortars.

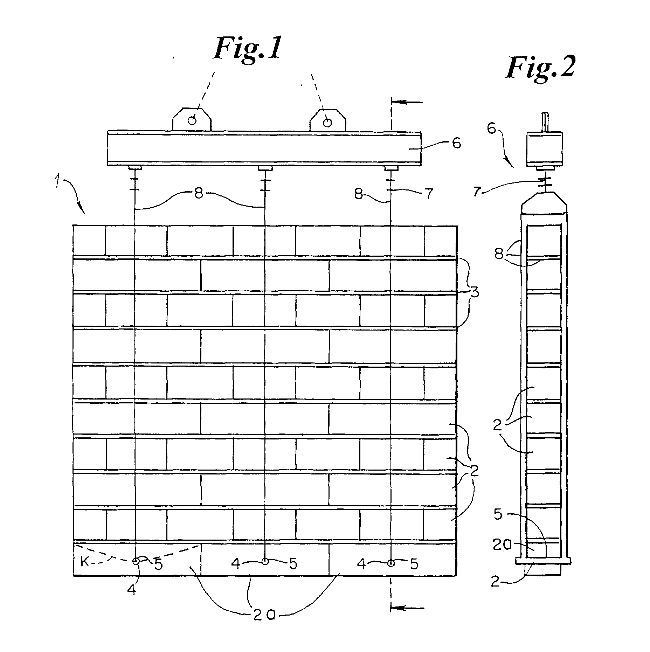

Figure 1 is a front elevational view, of a wall element in accordance with the invention.

Figure 2 is a side sectional view of the wall element of Figure 1, taken along line 2-2 of Figure 1.

Referring to the figures there is shown therein a self-supporting wall element 1 in accordance with the invention. The wall unit 1 is made up of limestone blocks 2 bonded together by adhesive layers 3. The adhesive layers 3 are formed of a cured two-component polyurethane adhesive as described herein. In the embodiment of the figures blocks 2a, in the lowest course of blocks 2, have been drilled to provide holes 4 through which lifting rods 5 have been inserted for transport and site placement purposes.

A lifting beam 6, suspended from a construction crane, not shown, has attached thereto a plurality of cable connectors 7. Chains 8 on both sides of the wall are attached to lifting rods 5 and to chain connectors 7. In this manner the wall element 1 may be raised, transported and placed at the construction site without supporting elements. After placement the cables 8 are disconnected, the lifting rods 5 are removed, and the holes 4 plugged with a suitable mortar or caulk. Thus the installation procedure is very simple compared to other masonry wall element installation techniques.

It will be appreciated that other transport and site placement techniques may also be utilized which do not employ lifting rods 5 and chains 8, without departing from the invention herein.

An important feature of the invention is the identification of a suitable adhesive material to use in forming the adhesive layers 3. In this regard it has been discovered that a reactive two-component polyurethane is surprisingly capable of accomplishing the objective of the invention in bonding materials such as limestone.
The reactive two-component polyurethane adhesive composition can also advantageously be used for all application purposes in which masonry materials of every type, including stone, brick, concrete and ceramic are required to be bonded in a fixed position to create wall constructions, finished construction elements, slabs, horizontal structures such as floors and walkways, and other structures.

One component "(A)" of the composition in accordance with the invention comprises a polyol and preferably also contains a plasticizer and, optionally, one or more other ingredients such as modifiers of the physical or cure properties of the adhesive system, for instance amines, silicas, molecular sieves, cure rate regulators, accelerators, and/or fillers.

The component (A) includes least one polyol which preferably has a molecular weight (in g/mole) of up to 6000, suitably 100-6000, more preferably, 200-2000 and, especially preferably 800-1500.

It is advantageous if the polyol has an OH number of up to 1400, suitably 20 -1000, more preferably 100-600 and especially preferably 200-500.

Suitable polyols comprise polyether polyols, polyester polyols, and/or polyether polyester polyols.

A first basic type of the preferred polyols for component (A) is based on polyethers and products that are formed in the modification thereof. The term "polyol" in the form in which it is used in this specification and the claims includes both diols and triols, as well as compounds having more than three hydroxyl groups per molecule. The use of triols is especially preferred.

Polyethers, such as poly(alkylene oxide) glycols in which the alkylene group is C₂-C₂₀, are especially suitable in accordance with the invention; e.g., the following are prepared: poly(1,2-propylene oxide) glycol and poly(1,3-propylene oxide) glycol, poly(tetraethylene oxide) glycol, poly(pentamethylene oxide) glycol, poly(hexamethylene oxide) glycol, poly(heptamethylene oxide) glycol, poly(octamethylene oxide) glycol, poly(nonamethylene oxide) glycol, and poly(1,2-butylene oxide) glycol and also any block copolymers of ethylene oxide and/or 1,2-propylene oxide, and polyformaldehyde acetals that are prepared via the reaction of formaldehyde with glycol, such as pentamethylene glycol or glycol mixtures, e.g., a mixture of tetramethylene glycols and pentamethylene glycols.

The polyether subunit preferably comprises a polyoxyalkylene polyol with 2 to 6 carbon atoms in the alkylene group. The polyoxyalkylene polyol preferably comprises polytetramethylene ether glycol (PTMEG).

Further preferred polyether polyols that are suitable are short-chain diols or triols with molecular weights of less than 250 g/mole, that are derived from diols or triols with 2-15 carbon atoms, such as ethylene glycol, propylene glycol, tetramethylene glycol, isobutylene glycol, pentamethylene glycol, 2,2-dimethyltrimethylene glycol, hexamethylene glycol, decamethylene glycols, dihydroxycyclohexane, cyclohexanedimethanol, resorcinol, hydroquinone, 1,5-dihydroxynaphthalene, and similar compounds. In addition, aliphatic diols or triols with 2 to 6 carbon atoms are also preferred. Suitable bisphenols include bis(p-hydroxydiphenyl), bis(p-hydroxyphenyl)methane, bis(p-hydroxyphenyl)propane, and 2,2-bis(p-hydroxyphenyl)propane. Polyether diols or triols with molecular weights of more than 250 g/mole that are derived from the aforementioned diols or triols are also capable of being used in accordance with the invention.

A second basic type of preferred polyol for component (A) is based on polyesters and the products that are formed in the modification thereof.

In particular, polyester polyols are suitable that are reaction products of different polyols with aromatic or aliphatic dicarboxylic acids and/or polymers of lactones.

Typical examples of aromatic acids which can be used in forming a suitable polyester polyol include terephthalic acid, isophthalic acid, phthalic acid, phthalic anhydride, substituted dicarboxylic acid compounds with a benzene ring, such as bis(p-carboxyphenylmethane)benzoic acid, p-oxy(p-carboxyphenyl)benzoic acid, ethylenebis(p-oxybenzoic acid), ethylenebis(p-benzoic acid), tetramethylenebis(p-oxybenzoic acid), 1,5-naphthalenedicarboxylic acid, 2,6-naphthalenedicarboxylic acid, 2,7-naphthalenedicarboxylic acid, phenanthrenedicarboxylic acid, anthracenedicarboxylic acid, 4,4'-sulfonyldibenzoic acid, indenedicarboxylic acid, and similar derivatives thereof and also ring substituted derivatives thereof, such as C₂-C₁₀ alkyl, halogen, alkoxy, or aryl derivatives. In addition, use can also be made of hydroxy acids, such as p-(β-hydroxyethoxy)benzoic acid, if an aromatic dicarboxylic acid is being considered.

Typical examples of aliphatic acids which can be used in forming a suitable polyester polyol include sebacic acid, adipic acid, and glutaric acid.

Typical examples of polyols which can be used in forming a suitable polyester polyol include ethylene glycol, butanediol, neopentyl glycol, hexanediol, propylene glycol, dipropylene glycol, diethylene glycol, and cyclohexanedimethanol.

In addition, any of the aforementioned hydroxy compounds which can be used in forming a polyether polyol can also be used for the synthesis of polyether polyols for esterification with the listed acid compounds in accordance with the invention.

A third basic type of preferred polyols for component (A) is based on polyether polyesters.

As far as the polyether polyesters are concerned, reaction products are particularly suitable in accordance with the invention that are derived from the various aforementioned polyols and aromatic or aliphatic dicarboxylic acids and/or polymers of lactones (e.g., polycaprolactone). Fatty acid esters and partially (hydrogenated) fatty acid esters are especially suitable. Castor oil and/or derivatives thereof are especially suitable.

The second component, "(B)," of the reactive two-component polyurethane adhesive used in the invention comprises a polyisocyanate compound, that is a compound which has at least two isocyanate groups per molecule. Component (B) may be made up of only polyisocyanate, that is one or more compounds having plural isocyanate functionality, but it may also include other ingredients.

Component (B) suitably exhibits an average isocyanate functionality of more than 1, preferably about 2 to about 3.2 and especially preferably 2.5-2.8. A functionality of at least 2 is preferred. The isocyanate can be aromatic or aliphatic. Typical examples of aromatic isocyanates include diphenylmethylene diisocyanate, tetramethylxylylene diisocyanate (TMXDI), isophorone diisocyanate, and toluene diisocyanate. Typical examples of aliphatic diisocyanates include hexamethylene diisocyanate, hydrogenated MDI, naphthalene diisocyanate, dodecane diisocyanate, and dimeric diisocyanates, as well as all polymeric and trimeric isocyanates. The isocyanate preferably comprises diphenylmethylene diisocyanate, tetramethylxylylene diisocyanate, isophorone diisocyanate, toluene diisocyanate, hexamethylene diisocyanate, or mixtures thereof. Most preferably of all, the isocyanate comprises methylenedi(phenyl isocyanate) and the reaction products thereof.

Component (B) may suitably contain one or more isocyanate functional prepolymer compounds, for example:
- prepolymers such as Desmodur® PF, Mondur® PF, or Isonate® M 342, which are reaction products of diphenylmethane diisocyanate or diphenylmethane diisocyanate oligomers and dipropylene glycol and/or tripropylene glycol;
- the reaction products of such prepolymers with a molar-deficient quantity of polyols;
- the reaction products of diphenylmethane diisocyanate with a molar-deficient quantity of long-chain and essentially bifunctional polyols;
- urethane-imine modified diphenylmethane diisocyanate derivatives such as, for example, Suprasec® 2020 or Desmodur® CD, in which the modification comprises, in particular, the introduction of side groups or side chains; suitable compounds for side groups are allophanates and carbodiimides;
- the reaction products of such modified isocyanates with a molar-deficient quantity of polyols.

Other analogously formed isocyanate functional prepolymer compounds can also be used in accordance with the invention. Thus, for example, use can be made of appropriate prepolymer compounds derived from other diisocyanates, such as toluene diisocyanate, hexane diisocyanate, hydrogenated diphenylmethane diisocyanate, isophorone diisocyanate, and similar compounds.

In addition to one or more of these isocyanate compounds, component (B) can also contain one or more additives such as plasticizers, silicas, molecular sieves, regulators, accelerators, fillers, and/or other conventional additives such as pigments, thixotropic agents, and similar materials.

Instead of this, it is also possible of course, though not usually expedient, for one to add such designated additives to the reactive, two-component system only during mixing, *i*.*e*., separately from the polyol portions of component (A) and the isocyanate portions of component (B).

An amine, including diamines and other multifunctional amines for example Buredur™ 43 obtainable from Witco AG, and/or highly dispersed silicic acid, for example HDK silicic acid, are preferably added to component (A) since these compounds confer thixotropic properties on the composition.

It is advantageous if the composition in accordance with the invention exhibits thixotropic properties since then the composition penetrates more deeply into the fine pores of the stone material when pressure is exerted on the mixture that comprises the composition, *e*.*g*., via the pieces of limestone that are used during the construction of the wall, and as a result improved positionally fixed anchoring is achieved.

The fixation of the pieces of limestone by the composition in accordance with the invention is achieved as a consequence of the polymer structure and the crosslinking reaction. In addition, reactive groups in the limestone can crosslink with the isocyanate groups.

In accordance with the invention, use can be made not only of pieces of limestone, but of all types of construction stones for the manufacture of finished construction elements, walls, slabs, floors, walkways etc. It is advantageous if the construction stones have at least some porosity so that the adhesive composition can penetrate into the aforementioned construction stones for the purpose of constructing a permanent, breakage-resistant bond. Penetration of the adhesive into the limestone surface and breakage resistance of the assembled wall element is facilitated by the presence of a plasticizer ingredient in the adhesive composition. Suitable construction stones include limestone, porous concrete, Ytong stones, brick (including sand-lime brick) and similar materials.

The standing time in a receptacle amounts to between 30 sec. and 3 hours. A standing time in the receptacle of between 3 and 30 min is advantageous. The standing time in the receptacle and the hardening time can be adjusted appropriately via the selection of the components for the composition and the proportions of the additives that are used.

The composition in usually adjusted by appropriate additives in such a way that the hardening time amounts to 3 hours. It goes without saying, of course, that the hardening time can also amount to less than 3 hours or to longer than 3 hours since the standing time in the receptacle and the hardening time can be adjusted as desired in accordance with techniques well known in the polyurethane formulation art, particularly by appropriate addition of a regulator and/or accelerator.

It is advantageous if the Shore D hardness of the cured adhesive composition amounts to between 20-90, and it is especially preferable if the Shore D hardness amounts to 60-80. The viscosity of the composition in mixed form, when measured at 20°C using a Brookfield viscometer, typically amounts to between 20,000-80,000 InPa·s. However, if required, the composition can also be adjusted in such a way that the value for the viscosity of the mixture is below 20,000 or above 80,000 mPa·s.

Component (A) that is used in accordance with the invention and component (B) that is used in accordance with the invention are preferably liquid and highly viscous after being mixed together. At the point of application, the mixture that comprises components (A) and (B) should preferably be used within a time period that is equal to the standing time in the receptacle minus 10%. Two-component mixing devices and metering devices that are customary in the polyurethane adhesive art can be used for mixing the two components (A) and (B).

Suitable plasticizers comprise Mesamoll® (Bayer AG; a plasticizer comprising the alkylsulfonic acid esters of phenol), Unimol® (Bayer AG; a group of plasticizers comprising phthalic acid esters), Santicizer® (Monsanto; a plasticizer on the basis of octyldiphenyl phosphate, isodecylbenzylbutyl phthalate, polyadipates, etc.), and similar materials.

Suitable amines are all those amines that are suitable for preventing the sedimentation of the filler and/or for conferring thixotropic properties on the composition, for example, Euredur® 43 (Witco Corp., a hardener for oxide resins on the basis of an amine, polyaminoamides, polyaminoimidazolines, and similar compounds).

In conferring the desired thixotropic properties on the composition, use can be made of, e.g., a silica such as fumed silica, highly dispersed silica, pyrogenic silica, or other forms of silicic acid. A suitable form of silica is, for example, highly dispersed silicic acid (HDK silicic acid). In addition, a molecular sieve, for example, Sylosiv A 3, can be added to component (A) to avoid foaming of the components on mixing together. At the usage location, moreover, the molecular sieve is suitable for increasing the adhesive force and for absorbing moisture that initially diffuses into the composition, e.g., from the stone surface.

ZL regulator (Bayer AG) and/or 5/R 101 accelerator (H.B. Fuller GmbH) is preferably used for adjusting the standing time in the receptacle. However, in accordance with the invention, other conventional regulators and accelerators are also usable. The 5/R 101 accelerator is a 5% solution of dibutyltin dilaurate in a plasticizer, preferably Mesamoll® .

Conventional filler substances can be used as the fillers. Use is preferably made of chalk (e.g. Juraweiß Blausiegel™ or Omya BL™ (99.5% CaCO₃; particle sizes: 99% smaller than 25 µm; mean particle size: 10 µm)); and/or baryta (e.g. Schwerspatmehl C11™ (91% BaSO₄, 2% SiO₂, 6% CaF₂; particles sizes: 99% smaller than 40 µm, 50% smaller than 10 µm, and 15% smaller than 2 µm)).

In a composition useful for preparing wall unit structures in accordance with the invention, component (A) constitutes 1-99 wt %, more suitably 10-95 wt %, preferably, 30-90 wt %, and especially preferably, 40-85 wt %, on the basis of the total composition comprising components (A) and (B); component (B) constitutes 1-99 wt %, more suitably 5-90 wt %, preferably 10-70 wt %, and especially preferably, 15-60 wt % on the basis of the total composition comprising components (A) and (B).

In a further composition useful in preparing wall unit structures in accordance with the invention, component (A) comprises 10-70 wt %, more suitably 20-60 wt %, and especially preferably 30-55 wt %, of polyol; 0.1-30 wt %, preferably 3-10 wt %, and especially preferably 3.5-5 wt %, of plasticizer; 0-10 wt %, preferably 0.5-6 wt %, and especially preferably 1-3 wt %, of amine; 0-10 wt %, preferably 0.5-6 wt %, and especially preferably 1-3 wt % of highly dispersed silicic acid; 0-15 wt %, preferably 1-10 wt %, and especially preferably 2-5 wt %, of molecular sieve; 0-5 wt %, preferably 0.2-3 wt %, and especially preferably 0.5-1 wt %, of regulator; 0-5 wt %, preferably 0.2-3 wt %, and especially preferably 0.5-2 wt %, of accelerator; 0-80 wt %, preferably 10-60 wt %, and especially preferably 20-55 wt %, of filler.

For use, components (A) and (B) are mixed in a conventional mixing device and metering device and are then, for example, applied, for instance by extruding the mixture in the shape of a cord or sausage, or as individual points or in any other desired way on at least one exterior surface of the construction stone. The mixture comprising the composition can also be applied by a spray nozzle, screen printing, blade coating, roller application or other methods. In assembling a wall element the adhesive may be applied to the top of a course of construction stones and then individual stones laid on the adhesive coated course, or the bottom of a construction stone may be coated with adhesive and then placed on a previously laid course of construction stones. Robots are suitably employed for both adhesive application and for laying of the construction stone.

In assembling horizontal structures such as walkway elements, flooring elements, and the like, similar bonding techniques may be employed. For such applications it may also be suitable to foam the adhesive composition, for instance by adding water or other conventional foaming agent to the composition.

The present invention will be elucidated in more detail on the basis of the following example.

### Example 1

Component (A), containing 13.5 wt % of Baycoll BT 1380 (Bayer AG) (synthetic polyether polyol); 24.34 wt % of castor oil (polyether polyol); 3.5 wt% of Mesamoll® (plasticizer); 2.0 wt % of Euredur 43 (an amine); 1 wt % of HDK silicic acid (highly dispersed silicic acid); 5 wt % of Sylosiv A 3 (a molecular sieve); 0.5 wt % of ZL regulator (a cure regulator); 0.65 wt% of 5/R 101 (a cure accelerator); 19.8 wt % of chalk, Juraweiß Blausiegel (filler); and 29.71 wt % of C 11 baryta (filler), was kept spatially separated in a two-component mixing device until the point of time of mixing with component (B) containing 100 wt % of diphenylmethane diisocyanate. A mixture comprising components (A) and (B) with a proportion of 100 parts by weight of (A) and 25 parts by weight of (B) was then applied to the construction stones that were to be bonded by a metering device.

In this way, a finished construction element that comprised pieces of limestone and that had a weight of approximately 4 tons was manufactured. The hardening time amounted to approximately 3 hours. The finished construction element could then be raised with the help of a crane but without the use of supporting elements or anchoring elements in the manner described above and installed at a construction site. Damage to the wall structure as a result of this installation could not subsequently be observed. The strength of the adhesive compound is comparable to concrete. An attempt to loosen individual pieces of limestone from the wall structure led only to material breakage of the pieces of limestone.

## Claims

1. A structural element comprising a plurality of pieces of a masonry material bonded together with a cured adhesive formulation, the cured adhesive formulation being a reaction product of a two-component polyurethane adhesive composition comprising:
a component (A) comprising at least one polyol; and
a component (B) comprising at least one isocyanate compound;
wherein said structural element is self supporting.

2. A structural element as in Claim 1, wherein component (A) further comprises a member of the group consisting of a plasticizer, an amine, a silica, a molecular sieve, a cure regulator, a cure accelerator, a filler, and mixtures thereof.

3. A structural element as in Claim 1 wherein component (A) includes at least one polyol which has a molecular weight of about 6000 g/mole or less.

4. A structural element as in Claim 1 wherein component (A) includes a polyol selected from the group consisting of a polyether polyol, a polyester polyol and/or a polyether polyester polyol, and mixtures thereof.

5. A structural element as in Claim 4, wherein the polyether polyol is selected from the group consisting of poly(alkylene oxide) glycols in which the alkylene group is C₂-C₂₀, block copolymers of ethylene oxide and/or 1,2-propylene oxide, and polyformaldehyde acetals which are reaction products of formaldehyde with a glycol or glycol mixture.

6. A structural element as in Claim 4, wherein the polyether polyester polyol is a reaction product of as least one fatty acid with a polyol.

7. A structural element as in Claim 1, wherein said at least one isocyanate compound has an average isocyanate functionality of is about 1 to about 4.

8. A structural element as in Claim 1 wherein the isocyanate compound is a reaction product of diphenylmethane diisocyanate or diphenylmethane diisocyanate oligomers with at least one polyol with a molar-deficient quantity of the polyol fraction.

9. A structural element as in Claim 1 wherein the isocyanate compound of component (B) contains a urethane-imine-modified diphenylmethane diisocyanate.

10. A structural element as in Claim 1 wherein component (A) comprises 10-70 wt % of polyol; 0.1-30 wt % of a plasticizer; 0-10 wt % of an amine; 0-10 wt % of highly dispersed silicic acid; 0-15 wt % of a molecular sieve; 0-5 wt % of a regulator; 0-5 wt % of an accelerator; and 0-80 wt % of a filler.

11. A structural element as in Claim 1 wherein:
component (A) comprises from about 30 to about 55 wt % of polyol; from about 3.5 to about 5 wt % if a plasticizer; from about 1 to about 3 wt % of an amine; from about 1 to about 3 wt % of highly dispersed silicic acid;
from about 2 to about 5 wt % of a molecular sieve; from about 0.5 to about 1 wt % of a regulator; from about 0.5 to about 2 wt % of an accelerator; and from about 20 to about 55 wt % of filler, and
component (B) consists essentially of at least one member selected from the group consisting of diphenylmethane diiscoyanate, mixtures of MDI isocyanates, and prepolymers of such isocyanates.

12. A structural element as in Claim 1 wherein the adhesive composition, has a hardening time in the range of 30 seconds to 3 hours and a Shore D hardness of about 20 to about 90 after hardening.

13. A structural element as in Claim 1 wherein said pieces of masonary material are members of the group consisting of stone, brick, porous ceramic and porous concrete.

14. A structural element as in Claim 1 in the form of a wall element, a flooring element or a walkway element.

15. A structural element as in Claim 1 wherein the adhesive bond strength is at least as great as the cohesive strength of the masonry material.

16. A structural element as in Claim 1 in the form of a finished slab.

17. A structural element as in Claim 1 wherein at least one of components (A) and (B) comprises a plasticizer.

18. A structural element as in Claim 1 wherein the cured adhesive formulation is in the form of a foam.

19. A process for forming a self supporting structural element of masonry material of claim 1 comprising glueing at east two pieces of limestone, porous concrete, Ytong stone, brick, or other porous mineral stone together with a two-component reactive polyurethane composition as defined in claim 1 and allowing the composition to cure.

20. A process as in Claim 19 wherein said composition comprises a foaming agent.

## Patentansprüche

1. Bauteil umfassend eine Mehrzahl von durch eine ausgehärtete Klebstofformulierung miteinander verbundenem Stücken eines Mauerwerkmaterials, wobei die ausgehärtete Klebstofformulierung ein Reaktionsprodukt einer 2-Komponenten Polyurethan-Klebstoff-Zusammensetzung ist, worin die Zusammensetzung umfaßt:
eine Komponente (A), die wenigstens ein Polyol umfaßt; und
eine Komponente (B), die wenigstens eine Isocyanat-Verbindung umfaßt; und
wobei das Bauteil selbsttragend ist.

2. Bauteil nach Anspruch 1,
**dadurch gekennzeichnet,** daß die Komponente (A) ferner Weichmacher, Amin, Kieselsäure, Molekularsieb, Härtungs-Regler, Härtungs-Beschleuniger, Füllstoff, und Mischungen davon, umfaßt.

3. Bauteil nach Anspruch 1,
**dadurch gekennzeichnet,** daß die Komponente (A) wenigstens ein Polyol mit einem Molekulargewicht von bis zu 6.000 g/Mol aufweist.

4. Bauteil nach Anspruch 1,
**dadurch gekennzeichnet,** daß die Komponente (A) ein aus der Gruppe aus Polyetherpolyol, Polyesterpolyol und/oder Polyetherpolyesterpolyol, und deren Mischungen, ausgewähltes Polyol enthält.

5. Bauteil nach Anspruch 4,
**dadurch gekennzeichnet,** daß das Polyetherpolyol aus Poly(alkylenoxid)glykolen, worin Alkylen C₂-C₂₀ ist, und/oder aus Blockcopolymeren von Ethylenoxid und/oder 1,2-Propylenoxid, und Polyformaldehydacetalen, die durch die Umsetzung von Formaldehyd mit Glykol , oder Glykolmischungen hergestellt werden, ausgewählt ist.

6. Bauteil nach Anspruch 4,
**dadurch gekennzeichnet,** daß der Polyetherpolyesterpolyol ein Umsetzungsprodukt aus wenigstens einer Fettsäure mit einem Polyol ist.

7. Bauteil nach Anspruch 1,
**dadurch gekennzeichnet,** daß die wenigstens eine Isocyanatverbindung eine mittlere Isocyanatfunktionalität von etwa 1 bis etwa 4 aufweist.

8. Bauteil nach Anspruch 1,
**dadurch gekennzeichnet,** daß die Isocyanatverbindung ein Umsetzungsprodukt aus Diphenylmethandiisocyanat oder Diphenylmethan-diisocyanat-Oligomeren und wenigstens einem Polyol mit molarem Unterschuß des Polyolanteils ist.

9. Bauteil nach Anspruch 1,
**dadurch gekennzeichnet,** daß die Isocyanatverbindung der Komponente (B) ein Urethanimin-modifiziertes Diphenylmethandiisocyanat enthält.

10. Bauteil nach Anspruche 1,
**dadurch gekennzeichnet,** daß die Komponente (A) 10-70 Gew.-% Polyol, 0,1-30 Gew.-% Weichmacher; 0-10 Gew.-% Amin; 0-10 Gew.-% hochdisperse Kieselsäure; 0-15 Gew.-% Molekularsieb; 0-5 Gew.-% Regler; 0-5 Gew.-% Beschleuniger und 0-80 Gew.-% Füllstoff umfaßt.

11. Bauteil nach Anspruch 1,
**dadurch gekennzeichnet,** daß die Komponente (A) ca. 30 - 55 Gew.-% Polyol, ca. 3,5 - 5 Gew.-% Weichmacher, ca. 1 - 3 Gew.-% Amin, ca. 1-3 Gew.-% hochdisperse Kieselsäure, ca. 2-5 Gew.-% Molekularsieb, ca. 0,5-1 Gew.-% Regler, 0,5-2 Gew.-% Beschleuniger, und ca. 20-55 Gew.-% Füllstoff, umfaßt; und daß die Komponente (B) im wesentlichen aus einem Stoff besteht, der aus der Gruppe bestehend aus Diphenylmethandiisocyanat, Mischungen von MDI Isocyanaten, und Präpolymeren aus diesen Isocyanaten, ausgewählt ist .

12. Bauteil nach Anspruch 1,
**dadurch gekennzeichnet,** daß die Klebstoff-Zusammensetzung eine Aushärtezeit im Bereich von 30 Sekunden bis 3 Stunden und eine Shore-D Härte von ca. 20-90 nach der Aushärtung aufweist.

13. Bauteil nach Anspruch 1,
**dadurch gekennzeichnet,** daß das Material der Mauerwerkstücke Stein, Ziegel, poröse Keramik und/oder Gasbeton umfaßt.

14. Bauteil nach Anspruch 1, in Form eines Wandelements, eines Bodenbelagelements oder eines Gehwegelements.

15. Bauteil nach Anspruch 1,
**dadurch gekennzeichnet,** daß Klebekraft mindestens so groß ist wie die Kohäsionskraft des Mauerwerkmaterials.

16. Bauteil nach Anspruch 1, in Form einer Fertigtafel.

17. Bauteil nach Anspruch 1,
**dadurch gekennzeichnet,** daß zumindest eine der Komponenten (A) und (B) einen Weichmacher umfaßt.

18. Bauteil nach Anspruch 1,
**dadurch gekennzeichnet,** daß die ausgehärtete Klebstofformulierung schaumförmig ist.

19. Verfahren zur Herstellung eines selbsttragenden Bauteils aus Mauerwerkmaterial nach einem der vorhergehenden Ansprüche, umfassend die Verklebung von wenigstens 2 Stücken Kalkstein, Gasbeton, Ytong-Stein, Ziegel, oder anderen porösen mineralischen Gesteins miteinander mit Hilfe einer reaktiven 2-Komponenten Polyurethan-Zusammensetzung wie in Anspruch 1 definiert, und Aushärtenlassen der Zusammensetzung.

20. Verfahren nach Anspruch 19,
**dadurch gekennzeichnet,** daß die Zusammensetzung ein Schäumungsmittel enthält.

## Revendications

1. Elément de construction comprenant une pluralité de morceaux d'un matériau de maçonnerie liés ensemble avec une formulation d'adhésif durcie, la formulation d'adhésif durcie étant un produit de réaction d'une composition d'adhésif polyuréthanne à deux composants comprenant :
un composant (A) comprenant au moins un polyol ; et
un composant (B) comprenant au moins un composé isocyanate ;
dans lequel ledit élément de construction est autoporteur.

2. Elément de construction selon la revendication 1, dans lequel le composant (A) comprend de plus un élément du groupe formé par un plastifiant, une amine, une silice, un tamis moléculaire, un régulateur de durcissement, un accélérateur de durcissement, une charge, et leurs mélanges.

3. Elément de construction selon la revendication 1, dans lequel le composant (A) inclut au moins un polyol qui possède une masse moléculaire d'environ 6 000 g/mole ou inférieure.

4. Elément de construction selon la revendication 1, dans lequel le composant (A) inclut un polyol choisi dans le groupe formé par un polyéther-polyol, un polyester-polyol et/ou un polyéther-polyester-polyol, et leurs mélanges.

5. Elément de construction selon la revendication 4, dans lequel le polyéther-polyol est choisi dans le groupe formé par les poly(oxyde d'alkylène)glycols dans lesquels le groupe alkylène est en C₂ à C₂₀, les copolymères séquencés d'oxyde d'éthylène et/ou d'oxyde de 1,2-propylène, et les poly(acétal formaldéhyde) qui sont les produits de réaction du formaldéhyde avec un glycol ou un mélange de glycols.

6. Elément de construction selon la revendication 4, dans lequel le polyéther-polyester-polyol est un produit de réaction d'au moins un acide gras avec un polyol.

7. Elément de construction selon la revendication 1, dans lequel ledit au moins un composé isocyanate possède une fonctionnalité d'isocyanate moyenne étant d'environ 1 à environ 4.

8. Elément de construction selon la revendication 1, dans lequel le composé isocyanate est un produit de réaction de diphénylméthane-diisocyanate ou d'oligomères de diphénylméthane-diisocyanate avec au moins un polyol avec une quantité déficitaire en moles de fraction polyol.

9. Elément de construction selon la revendication 1, dans lequel le composé isocyanate du composant (B) contient un diphénylméthane-diisocyanate à modification uréthanne-imine.

10. Elément de construction selon la revendication 1, dans lequel le composant (A) comprend 10 à 70 % en poids de polyol ; 0,1 à 30 % en poids d'un plastifiant ; 0 à 10 % en poids d'une amine ; 0 à 10 % en poids d'acide silicique hautement dispersé ; 0 à 15 % en poids d'un tamis moléculaire ; 0 à 5 % en poids d'un régulateur ; 0 à 5 % en poids d'un accélérateur ; et 0 à 80 % en poids d'une charge.

11. Elément de construction selon la revendication 1, dans lequel :
le composant (A) comprend d'environ 30 à environ 55 % en poids de polyol ; d'environ 3,5 à environ 5 % en poids d'un plastifiant ; d'environ 1 à environ 3 % en poids d'une amine ; d'environ 1 à environ 3 % en poids d'acide silicique hautement dispersé ; d'environ 2 à environ 5 % en poids d'un tamis moléculaire ; d'environ 0,5 à environ 1 % en poids d'un régulateur ; d'environ 0,5 à environ 2 % en poids d'un accélérateur ; et d'environ 20 à environ 55 % en poids de charge, et
le composant (b) se compose essentiellement d'au moins un élément choisi dans le groupe formé par le diphénylméthane-diisocyanate, des mélanges d'isocyanates MDI, et des prépolymères de tels isocyanates.

12. Elément de construction selon la revendication 1, dans lequel la composition d'adhésif possède un temps de durcissement dans la plage de 30 secondes à 3 heures et une dureté Shore D d'environ 20 à environ 90 après durcissement.

13. Elément de construction selon la revendication 1, dans lequel lesdits morceaux de matériau de maçonnerie sont des éléments du groupe formé par la pierre, la brique, la céramique poreuse et le béton poreux.

14. Elément de construction selon la revendication 1 sous la forme d'un élément de paroi, un élément de plancher ou un élément de passerelle.

15. Elément de construction selon la revendication 1, dans lequel la résistance d'adhérence est au moins aussi grande que la force de cohésion du matériau de maçonnerie.

16. Elément de construction selon la revendication 1 sous la forme d'une dalle finie.

17. Elément de construction selon la revendication 1, dans lequel au moins un des composants (A) et (B) comprend un plastifiant.

18. Elément de construction selon la revendication 1, dans lequel la formulation d'adhésif durcie est sous la forme d'une mousse.

19. Procédé pour la formation d'un élément de construction autoporteur de matériau de maçonnerie selon-la revendication 1, comprenant l'étape consistant à coller, ensemble, au moins deux morceaux de béton poreux à base de calcaire, de pierre Ytong, de brique, ou autre pierre minérale poreuse avec une composition de polyuréthanne réactive à deux composants telle que définie selon la revendication 1 et à laisser la composition durcir.

20. Procédé selon la revendication 19, dans lequel ladite composition comprend un agent moussant.
